# EUROPEAN PATENT SPECIFICATION

(11) **EP 0 824 866 B1**
(45) Date of publication and mention of the grant of the patent: **13.11.2002**
(21) Application number: 96202093.9
(22) Date of filing: 24.07.1996
(51) Int. Cl.: A21D 13/00, A21D 13/08

(54) **Process for the production of patterned, three dimensional dough systems**
Verfahren für die Herstellung von gemusterten dreidimensionalen Teigwaren
Procédé de fabrication de pâtes tridimensionnelles à motifs

(43) Date of publication of application: 25.02.1998
(73) Proprietor: CSM Nederland B.V., 1112 XE Diemen (NL)
(72) Inventor: van der Zon, Petrus Wilhelmus M., deceased (NL)
(74) Representative: Jorritsma, Ruurd

(56) References cited:
- EP-A- 0 522 892
- WO-A-92/11767
- US-A- 3 917 856
- US-A- 5 145 699
- DATABASE WPI Section Ch, Week 8819 Derwent Publications Ltd., London, GB; Class D11, AN 88-128911 XP002023250 & JP 63 071 139 A (FUJI COUNTRY KK) , 31 March 1988
- PATENT ABSTRACTS OF JAPAN vol. 015, no. 429 (C-0880), 31 October 1991 & JP 03 180145 A (KANEBO LTD), 6 August 1991,

## Description

The invention relates to a process for making three-dimensional baked bakery dough products according to the preamble of claim 1.

Although doughs with many different compositions are known for many years, dough systems wherein different dough compositions are present are rare in the prior art. If disclosed, such as in US 5.145,699 one of the doughs is used for a particular purpose, such as in this reference as a control means for regulating the moisture content of the dough layer and not to obtain optical effects e.g. in the form of patterns.

On the other hand quite a number of different baked bakery products are known wherein a pattern is aimed for. In these products the patterns are achieved by hand shaping of different dough layers of always the same dough system. This thus means a time consuming methodology for preparing the dough products.

WO 9211767 discloses a method for producing direct baked dough and food products obtained by baking such a dough. Two separate doughs are prepared and placed on top of each other. US 3917856A discloses a refrigerated corn bread dough which is divided into biscuits like dough pieces and packed in refrigerated dough containers. These layers are obtained by extruding and subsequently these layers are bonded together.

Pastry product made from materials having differing consistencies are described in EP 0 522 891.

We studied whether we could find ways, which would result in a dough-product, either after fermentation and/or after baking, that displayed a predetermined three dimensional pattern, and with which above problems could be avoided.

This aim is realized with the characterizing features of claim 1. According to the process of the invention dough systems are provided that will form three dimensional patterns when heated in an oven, wherein the dough comprises at least two independent areas with a different dough composition. Preferably the different dough compositions contain at least 20 wt% of flour and have different expansion capabilities, either during fermentation and/or during heating.

Very conveniently the different dough compositions are present in a way that creates a preselected three dimensional pattern upon baking of the dough system.

Although many factors influence the expansion capability of a dough we found that a very easy way to achieve a different expansion capability in different doughs is by using different levels of leavener(s) in the different dough compositions. In this instance the leavener in the different dough compositions can be the same leavener or can be different. Alternatively at least one of the dough compositions can be free of leavener, whereas the other dough composition(s) contain at least one leavener. Useful leaveners are selected from the group consisting of chemical leaveners, in particular sodium hydrogen carbonate, but other well-known chemical leaveners can be applied as well, and yeasts. The level wherein the leaveners are applied can range from 0.2-15 wt% for a chemical leavener and from 0.5-20 wt% for a yeast. So very good results were obtained with a dough system wherein one dough layer contained 1 wt% of yeast and the other dough layer contained 10 wt% of the same yeast. It is of course also possible to combine a dough layer wherein a yeast is present with a dough layer wherein a chemical leavener is present, as long as the expension capability of the two dough layers are different.
Expansion capability is defined here as the ability of a dough to expand in volume during a fermentation for 30 min at 32 oC and 80% rel. hum. (in case a yeast is applied) and is measured after freezing at -32°C for 30 minutes or as the increase in volume of a dough upon heating at 140 oC in case a chemical leavener is used.

Very attractive patterns are obtained if the expansion capabilities of the different dough compositions differ at least 10%. In particular very nice patterns are achieved if the dough with the highest expansion capability is at least partly, preferably completely embedded in the dough composition with the lowest expansion capability. In this way the driving force of the dough with the highest expansion capability is used to create patterns in the dough with the lowest expansion capability.

Another way to achieve the different expansion capabilities in the different dough compositions is to use different types of yeasts with different activities in the different dough compositions.
Alternatively a difference in expansion capability can also be the result of the presence of different bread improver ingredients or of different levels of the same bread improver ingredients in the different dough compositions. Examples of these bread improver ingredients are: emulsifiers, such as DATA-esters, lecithins and HYMONO's, enzymes, such as amylases, xylanases, oxydases etc, anti-oxidants, such as ascorbic acid etc.

An efficient way to obtain the desired results is to use the leavener(s) and/or yeast(s) in levels that result upon heating at 140 oC in a difference in ovenspring for the different doughs of at least 10 vol%, ovenspring being defined here as the increase in volume of a dough upon heating in an oven per gram of dough.

According to another embodiment of our invention we can also apply different leaveners in the different doughs that create different ovensprings at different temperatures upon baking of the doughs, this will e. g. be the case if different chemical leaveners are used in the different doughs, or if a yeast is applied in one dough and a chemical leavener is applied in another dough.

Our new finding is not limited to the use of bread type doughs with a certain rheology, according to our invention it is also possible to use a batter as one of the dough compositions. Examples of such batters are cake batters or pan cake batters. These batters can contain a chemical leavener although they also can be free of any leavener.

The dough system according to the invention can be used at ambient temperatures, however it is also possible, depending on the exact dough composition to cool the dough to so called chilled temperatures (about 0-10 oC), or even to freeze the dough systems to temperatures below 0 oC. In these instances the dough composition can require the presence of specific components, e.g. as disclosed in our WO 95/17099.

Above dough systems can be applied as completely unproofed doughs, although we prefer the doughs to be at least partly proofed or even fully proofed.

Part of our invention are also the baked products having a three dimensional pattern that can be obtained after baking of preshaped dough systems with the composition according to our invention.

Although the novel dough compositions can be made by conventional techniques, a very convenient way to make them is by a process wherein
(i) a dough (D-1) is made having an expansion capability of E-1
- (ii) at least one other dough (D-2) is made having an expansion capability of E-2, which is different from E-1
- (iii) D-1 is rolled out to a flat piece of dough
- (iv) D-2 is (are) formed to one or more strand(s) of dough
- (v) one or more strands of dough D-2 are rolled in the dough D-1 to form a cylinder of dough comprising doughs D-1 and D-2
- (vi) the cylinder of (v) is cut into slices, optionally after cooling of the dough cylinder, whereby each slice comprises areas of the different doughs D-1 and D-2
- (vii) the slices resulting from (vi) are proofed during 10-60 min at 28-36 oC
- (viii) the proofed slices of (vii) are baked at 180-250 oC for 10-60 min.

### EXAMPLES

By using the process as described above a dough D-1 and a dough D-2 were prepared. D-1 contained 3 wt% of baker's yeast and D-2 contained 13 wt% of the same baker's yeast. The yeast applied was Koningsgist from Gist-Brocades. Therefore the expansion capability of the two dough compositions differed considerably(>200 %). According to step (iv) of our process 3 strands of D-2 were made,each having a diameter of about 2 cm. D-1 was rolled out to a rectangle of 25x40 cm. The 3 strands of D-2 were rolled in separately into the rolled out D-1. This resulted in a cylinder of dough D-1 wherein three areas of D-2 were embedded. This cylinder was cooled to 10 oC and the cylinder was cut into slices sothat each slice consisted of an area of D-1 wherein three areas of D-2 were incorporated. Each slice was subjected to proofing at 32 oC during 50 min.The proofed slices were baked in an oven at 240 oC during 8 min. The products obtained displayed a three dimensional pattern because of the different ovensprings that occurred during the bake off.

## Claims

1. Process for making three-dimensional baked dough products, wherein
- (i) a dough (D-1) is made having an expansion capability of B-1
- (ii) at least one other dough (D-2) is made having an expansion capability of E-2, which is different from E-1
- (iii) D-1 is rolled out to a flat piece of dough
- (iv) D-2 is (are) formed to one of more strand(s) of dough
- (v) one or more strands of dough D-2 are rolled in the dough D-1 to form a cylinder of dough comprising doughs D-1 and D-2, **characterised in that**
- (vi) the cylinder of (v) is cut into slices, optionally after cooling of the dough cylinder, whereby each slice comprises areas of the different doughs D-1 and D-2
- (vii) the slices resulting from (vi) are proofed during 10-60 min at 28-36°C
- (viii) the proofed slices of (vii) are baked at 180-250° C for 10-60 min.

2. Process according to claim 1, wherein the different doughs (D-1 and D-2) contain at least 20 wt.% flour.

3. Process according to claim 2, wherein the different expansion capabilities of D1-D2 are the result of the presence of different levels of leavener(s) in the different dough compositions.

4. Process according to claim 3, wherein at least one of the dough compositions is free of leavener.

5. Process according to claims 3-4, wherein the leavener(s) is (are) from the group, consisting of chemical leaveners and yeast.

6. Process according to claims 2-5, wherein at least two dough compositions are present from which the expansion capability differs at least 10 vol. %.

7. Process according to claim 2, wherein the different expansion capabilities are the result of the presence of different yeasts with different activity in the different dough compositions.

8. Process according to claim 2, wherein the different expansion capabilities are the result of the presence of different bread improvers ingredients or the same bread improver ingredients, however in different levels in the different dough compositions.

9. Process according to claims 2-7, wherein the leavener(s) and/or yeast(s) is (are) used in levels that result upon heating at 140 ° C in a difference in ovenspring for the different doughs of at least 10 vol.%.

10. Process according to claim 2 wherein different leaveners are present in the different doughs that create different ovensprings at different temperatures upon baking of the doughs.

11. Process according to claim 2, wherein at least one of the dough compositions is a batter, optionally free of leavener.

12. Process according to claims 2-11, wherein the dough system is partly or completely proofed.

13. Process according to claims 2-12, wherein the dough systems are chilled or frozen.

## Patentansprüche

1. Verfahren zum Herstellen dreidimensionaler gebackener Teigerzeugnisse, wobei:
(i) ein Teig (D-1) hergestellt wird, der eine Ausdehnungsfähigkeit E-1 hat,
(ii) wenigstens ein weiterer Teig (D-2) hergestellt wird, der eine Ausdehnungsfähigkeit E-2 hat, die sich von E-1 unterscheidet,
(iii) D-1 zu einem flachen Teigstück ausgerollt wird,
(iv) D-2 zu einem oder mehr Strang/Strängen Teig geformt wird/werden,
(v) ein oder mehrere Stränge von Teig D-2 in den Teig D-1 gerollt werden, um einen Zylinder aus Teig zu formen, der Teige D-1 und D-2 umfasst, **dadurch gekennzeichnet, dass**:
(vi) der Zylinder aus v in Scheiben geschnitten wird, und zwar wahlweise nach Kühlen des Teigzylinders, so dass jede Scheibe Bereiche der verschiedenen Teige D-1 und D-2 umfasst,
(vii) die in vi entstehenden Scheiben bei 28-36°C 10-60 min aufgetrieben werden,
(viii) die aufgetriebenen Scheiben aus (vii)bei 180-250°C 10-60 min lang gebacken werden.

2. Verfahren nach Anspruch 1, wobei die verschiedenen Teige (D-1 und D-2) wenigstens 20 Gew.-% Mehl enthalten.

3. Verfahren nach Anspruch 2, wobei die unterschiedlichen Ausdehnungsfähigkeiten von D1-D2 das Ergebnis des Vorhandenseins unterschiedlicher Mengen an Triebmittel/n in den verschiedenen Teigzusammensetzungen sind.

4. Verfahren nach Anspruch 3, wobei wenigstens eine der Teigzusammensetzungen frei von Triebmittel ist.

5. Verfahren nach Anspruch 3-4, wobei das/die Triebmittel aus der Gruppe ist/sind, die aus chemischen Triebmitteln und Hefe besteht.

6. Verfahren nach Anspruch 2-5, wobei wenigstens zwei Teigzusammensetzungen vorhanden sind, bei denen sich die Ausdehnungsfähigkeit um wenigstens 10 Vol.-% unterscheidet.

7. Verfahren nach Anspruch 2, wobei die unterschiedlichen Ausdehnungsfähigkeiten das Ergebnis des Vorhandenseins verschiedener Hefen mit unterschiedlicher Aktivität in den verschiedenen Teigzusammensetzungen sind.

8. Verfahren nach Anspruch 2, wobei die verschiedenen Ausdehnungsfähigkeiten das Ergebnis des Vorhandenseins unterschiedlicher Brot-Verbesserungsmittel oder der gleichen Brot-Verbesserungsmittel sind, die jedoch in den verschiedenen Teigzusammensetzungen in unterschiedlichen Mengen vorhanden sind.

9. Verfahren nach Anspruch 2-7, wobei das/die Triebmittel und/oder Hefe/n in Mengen eingesetzt wird/werden, die beim Erhitzen auf 140°C einen Unterschied des Aufgehens für die verschiedenen Teige von wenigstens 10 Vol.-% bewirken.

10. Verfahren nach Anspruch 2, wobei verschiedene Triebmitteln in den verschiedenen Teigen vorhanden sind, die unterschiedliches Aufgehen bei unterschiedlichen Temperaturen beim Backen der Teige bewirken.

11. Verfahren nach Anspruch 2, wobei wenigstens eine der Teigzusammensetzungen ein geschlagener Teig ist, der wahlweise frei von Triebmittel ist.

12. Verfahren nach den Ansprüchen 2-11, wobei das Teigsystem teilweise oder vollständig aufgetrieben wird.

13. Verfahren nach den Ansprüchen 2-12, wobei die Teigsysteme gekühlt oder gefroren werden.

## Revendications

1. Procédé pour fabriquer des produits de pâte de cuisson à trois dimensions, dans lequel :
(i) une pâte (D-1) est réalisée ayant une capacité d'étirement de E-1
(ii) au moins une autre pâte (D-2) est réalisée ayant une capacité d'étirement de E-2, qui est différente de E-1
(iii) D-1 est étalée pour former un morceau de pâte plat
(iv) D-2 est (sont) formée(s) en une ou plusieurs bandes de pâte
(v) une ou plusieurs bandes de pâte D-2 sont enroulées dans la pâte D-1 pour former un cylindre de pâte comprenant les pâtes D-1 et D-2, **caractérisé en ce que** :
(vi) le cylindre de (v) est coupé en tranches, éventuellement après refroidissement du cylindre de pâte, moyennant quoi chaque tranche comprend des zones de pâtes différentes D-1 et D-2.
(vii) les tranches résultant de (vi) sont testées pendant 10 à 60 minutes à 28-36°C
(viii) les tranches testées de (vii) sont cuites à 180-250° pendant 10 à 60 minutes.

2. Procédé selon la revendication 1, dans lequel les différentes pâtes (D-1 et D-2) contiennent au moins 20 % en poids de farine.

3. Procédé selon la revendication 2, dans lequel les capacités d'étirement différentes de D-1 et D-2 sont dues à la présence de niveaux différents d'agents de levage dans les différentes compositions de pâte.

4. Procédé selon la revendication 3, dans lequel au moins l'une des compositions de pâte est exempte d'agent de levage.

5. Procédé selon les revendications 3-4, dans lequel l'agent ou les agents de levage fait(font) partie du groupe des agents de levage chimiques et des levures.

6. Procédé selon les revendications 2-5, dans lequel sont présentes au moins deux compositions de pâte dont la capacité d'étirement diffère d'au moins 10% en volume.

7. Procédé selon la revendication 2, dans lequel les capacités d'étirement différentes sont le résultat de la présence de différentes levures avec une activité différente dans les différentes compositions de pâte.

8. Procédé selon la revendication 2, dans lequel les capacités d'étirement différentes sont le résultat de la présence d'ingrédients d'amélioration du pain différents ou des mêmes ingrédients d'amélioration du pain, à des niveaux différents cependant, dans les différentes compositions de pâte.

9. Procédé selon les revendications 2-7, dans lequel l'agent ou les agents de levage et/ou levure(s) est(sont) utilisés à des niveaux qui résultent lors d'un chauffage à 140°C en une différence de gonflement pour les différentes pâtes d'au moins 10% en volume.

10. Procédé selon la revendication 2, dans lequel différents agents de levage sont présents dans les différentes pâtes qui créent des gonflements différents à différentes températures lors de la cuisson des pâtes.

11. Procédé selon la revendication 2, dans lequel au moins une des compositions de pâte est une pâte à frire, éventuellement exempte d'agent de levage.

12. Procédé selon les revendications 2-11, dans lequel le système de pâte est en partie ou entièrement testé.

13. Procédé selon les revendications 2-12, dans lequel les systèmes de pâte sont réfrigérés ou congelés.
